# EUROPÄISCHE PATENTSCHRIFT

(11) **EP 1 811 623 B1**
(45) Veröffentlichungstag und Bekanntmachung des Hinweises auf die Patenterteilung: **08.06.2011**
(21) Anmeldenummer: 06021918.5
(22) Anmeldetag: 19.10.2006
(51) Int. Cl.: H02G 3/14, H01H 9/02

(54) **Elektrisches/elektronisches Installationsgerät**
Electric/electronic installation apparatus
Appareil d'installation électrique/électronique

(30) Priorität: 27.12.2005 DE 102005062487
(43) Veröffentlichungstag der Anmeldung: 25.07.2007
(73) Patentinhaber: Insta Elektro GmbH, 58509 Lüdenscheid (DE)
(72) Erfinder: Hilleke, Dieter, Dipl.-Ing., 57413 Finnentrop (DE); Stecura, Darius, Dipl.-Ing., 45731 Waltrop (DE); Schlicht, Thomas, Dipl.-Ing., 58093 Hagen (DE)

(56) Entgegenhaltungen:
- EP-A- 1 340 880
- WO-A-03/084016
- DE-A1- 19 615 827
- DE-C1- 10 233 331

## Beschreibung

Die vorliegende Erfindung geht von einem gemäß Oberbegriff des Hauptanspruches konzipierten elektrischen/elektronischen Installationsgerät aus.

Derartige elektrische/elektronische Installationsgeräte sind in der Regel dafür vorgesehen, eine Vielzahl von in Gebäuden installierten Aktoren (Jalousieantriebe, Beleuchtungseinrichtungen, Fühler, Wächter usw.) bedarfsgerecht zu beeinflussen. Zu diesem Zweck sind die unterschiedlichsten Installationseinrichtungen, wie Schalter, Taster, Dimmer usw. bekannt geworden. Damit eine Programmierung der elektrischen/elektronischen Installationsgeräte auf einfache Art und Weise vorgenommen werden kann, sind diese oftmals mit einer Betriebsartenumschalteinrichtung versehen. Die Betriebsartenumschalteinrichtung bewirkt, dass ein solches Installationsgerät ausgehend von seinem Betriebsmodus in einem Programmiermodus bzw. vom Programmiermodus in seinen Betriebsmodus umgeschaltet werden kann.

Durch die WO 03/084 016 A1 ist ein dem Oberbegriff des Hauptanspruches entsprechendes elektrisches/elektronisches Installationsgerät für die Gebäudesystemtechnik bekannt geworden. Dieses elektrische/elektronische Installationsgerät für die Gebäudesystemtechnik ist mit einem die Funktionsbauteile aufnehmenden, aus Kunststoff bestehendem Gehäuse versehen und weist mehrere verstellbar am Gehäuse gelagerte Betätigungselemente auf und ist mit einer im normalen Betrieb abgedeckten Betriebsartenumschalteinrichtung versehen. Um die Betriebsartenumschalteinrichtung betätigen zu können, muss jedoch die gesamte, alle Betätigungselemente aufweisende Abdeckung vom Gehäuse entfernt werden, so dass alle, auch nicht zur Betriebsartenumschalteinrichtung gehörigen Schaltkontakte frei zugänglich sind. Außerdem sind für die Betriebsartenumschalteinrichtung zusätzliche, im normalen Betrieb nicht betätigbare Schaltelemente vorgesehen.

Des weiteren ist durch die DE 196 15 827 A1 ein elektrisches/elektronisches Installationsgerät für die Gebäudesystemtechnik bekannt geworden, welches mehrere verstellbar am Gehäuse gelagerte Betätigungselemente aufweist und welches mit einer Betriebsartenumschalteinrichtung versehen ist. Die Betriebsartenumschalteinrichtung wird durch die wahlweise bzw. gleichzeitige Betätigung von mehreren Betätigungselementen aktiviert. Durch eine solche Ausbildung kann es jedoch im "normalen" Betrieb dazu kommen, dass der Benutzer unbeabsichtigt die Betriebsartenumschalteinrichtung durch eine Betätigung mehrerer Betätigungselemente aktiviert, wenn er eigentlich einen Schaltvorgang auslösen wollte.

Zudem ist durch die EP 1 340 880 A1 ein Verfahren zur Einstellung zumindest einer flexiblen Endposition eines Jalousieantriebes mit einem elektronischen Schaltwerk bekannt geworden, bei welchem ein Programmiermodus zur Einstellung der mindestens einen Endposition am Jalousieantrieb durch einen standardmäßigen Schaltfühler oder alternativ durch gleichzeitige Betätigung der Signaleingänge AUF und AB am Einstellkabel eingeschaltet werden kann. Durch eine solche Ausbildung kann es jedoch im "normalen" Betrieb dazu kommen, dass der Benutzer unbeabsichtigt die Betriebsartenumschalteinrichtung durch eine Betätigung mehrerer Betätigungselemente aktiviert, wenn er eigentlich einen Schaltvorgang auslösen wollte.

Außerdem ist durch die DE 102 33 331 C1 ein elektrisches Schaltgerät mit einem wannenförmig ausgebildeten Sockelteil zur Aufnahme einer elektrischen Leiterplatte bekannt geworden. Auf der elektrischen Leiterplatte sind die zur Realisierung der geforderten Funktionen notwendigen elektrischen/elektronischen Bauteile angeordnet, welche durch zumindest eine in mehrere Richtungen verstellbar gelagerte Betätigungstaste angesteuert werden. Zumindest ein auf der Leiterplatte vorhandenes Schaltelement ist als Mikroschalter ausgeführt.

Ausgehend von derart ausgebildeten elektrischen/elektronischen Installationsgeräten liegt der vorliegenden Erfindung die Aufgabe zugrunde, ein Installationsgerät zu schaffen, bei dem die Betriebsartenumschalteinrichtung nicht unbeabsichtigt vom Benutzer im "normalen" Betrieb aktiviert werden kann und bei welchem eine verwechslungssichere, einfache Bedienung der Betriebsartenumschalteinrichtung ohne die Verwendung von zusätzlichen Schaltelementen realisiert ist.

Erfindungsgemäß wird diese Aufgabe durch die im Hauptanspruch angegebenen Merkmale gelöst.

Bei einer solchen Ausbildung ist besonders vorteilhaft, dass sich die Betriebsartenumschalteinrichtung platzsparend auf besonders kostengünstige Art und Weise realisieren lässt.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert.

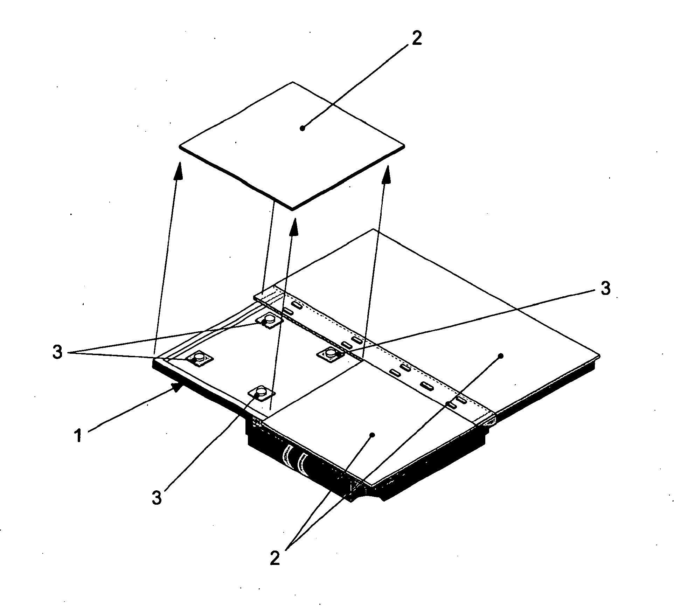

Wie aus der Figur hervorgeht, besteht ein solches elektrisches/elektronisches Installationsgerät hauptsächlich aus einem aus Kunststoff bestehenden Gehäuse 1 an dem verstellbar mehrere Betätigungselemente 2 gelagert sind.

Wie des weiteren aus der Figur hervorgeht, ist am Gehäuse 1 ein entfernbares Betätigungselement 2 gelagert, welches im "normalen" Betrieb eine Gruppe von vier Schaltkontakten 3 überdeckt. Während des "normalen" Betriebes können diese vier Schaltkontakte 3 nur in Abhängigkeit der Betätigung des Betätigungselementes 2 ein- bzw. ausgeschaltet werden. Während des "normalen" Betriebes sind aufgrund der Abmessungen des Betätigungselementes 2 nur bestimmte Schaltkontakte 3 gleichzeitig betätigbar. Somit ist im "normalen" Betrieb sichergestellt, dass der Benutzer nicht unbeabsichtigt die Betriebsartenumschalteinrichtung aktivieren kann. Dies kann nämlich erst dadurch erreicht werden, wenn nach Abnahme des Betätigungselementes 2 zwei diagonal gegenüberliegend angeordnete Schaltkontakte 3 dieser Gruppe von vier Schaltkontakten 3 innerhalb eines kurzen Zeitraums zusammen betätigt worden sind. Wie schon erwähnt, ist es im "normalen" Betrieb nicht möglich ausschließlich diese beiden diagonal gegenüberliegend angeordneten, als Mikroschalter/Mikrotaster ausgebildeten Schaltkontakte 3 zusammen in der bereits vorbeschriebenen Art und Weise zu betätigen. Alternativ können die Schaltkontakte auch als Schaltelemente einer sogenannten Domschaltmatte ausgeführt sein. Auf einfache Art und Weise, ohne dass zusätzliche Schaltkontakte benötigt werden, ist eine Verwechslungssichere, einfach zu bedienende Betriebsartenumschalteinrichtung für elektrische/elektronische Installationsgeräte realisiert.

## Patentansprüche

1. Elektrisches/elektronisches Installationsgerät für die Gebäudesystemtechnik mit einem die Funktionsbauteile aufnehmenden, aus Kunststoff bestehendem Gehäuse (1) und mehreren verstellbar am Gehäuse (1) gelagerten Betätigungselementen (2) sowie einer im normalen Betrieb abgedeckten Betriebsartenumschalteinrichtung, **dadurch gekennzeichnet, dass** die Betriebsartenumschalteinrichtung eine Gruppe von zumindest vier Schaltkontakten (3) aufweist, die im normalen Betrieb von einem Betätigungselement (2) überdeckt und in Abhängigkeit der Betätigung dieses Betätigungselementes (2) beeinflussbar sind und das dieses Betätigungselement (2) Abmessungen aufweist, so dass nur bestimmte der zumindest vier Schaltkontakte im normalen Betrieb gleichzeitig betätigbar sind, und dass dieses Betätigungselement (2) vom Gehäuse (1) entfernbar ist, und dass die Aktivierung der Betriebsartenumschalteinrichtung durch die gleichzeitige Betätigung von zwei diagonal gegenüberliegend angeordneten, im normalen Betrieb nicht gleichzeitig betätigbaren Schaltkontakten (3) erfolgt.

2. Elektrisches/elektronisches Installationsgerät nach Anspruch 1, **dadurch gekennzeichnet, dass** zumindest ein Betätigungselement (2) vom Gehäuse (1) entfernbar ist, welches eine Gruppe von zumindest sechs Schaltkontakten (3) überdeckt, und dass die Betriebsartenumschalteinrichtung durch die Betätigung von zwei diagonal gegenüberliegend angeordneten Schaltkontakten (3) dieser Gruppe von sechs Schaltkontakten (3) aktivierbar ist.

3. Elektrisches/elektronisches Installationsgerät nach Anspruch 1 oder 2,
**dadurch gekennzeichnet, dass** zumindest ein Betätigungselement (2) vom Gehäuse (1) entfernbar ist, welches eine Gruppe von zumindest acht Schaltkontakten (3) überdeckt, und dass die Betriebsartenumschalteinrichtung durch die Betätigung von zwei diagonal gegenüberliegend angeordneten Schaltkontakten (3) dieser Gruppe von acht Schaltkontakten (3) aktivierbar ist.

4. Elektrisches/elektronisches Installationsgerät nach einem der Ansprüche 1 bis 3, **dadurch gekennzeichnet, dass** zumindest ein Schaltkontakt (3) als Mikroschalter ausgeführt ist.

5. Elektrisches/elektronisches Installationsgerät nach einem der Ansprüche 1 bis 4, **dadurch gekennzeichnet, dass** zumindest ein Schaltkontakt (3) als Schaltelement einer sogenannten Domschaltmatte ausgeführt ist.

## Claims

1. Electrical / electronic installation device for the building system technology sector having a housing (1) made of plastic for accommodating the functional components, and several control members (2) that are mounted in a variable way on the housing (1), and a facility for changing the operating mode which is covered in normal operations, **characterised in that** the facility for changing the operating mode features a group of at least four switching contacts (3) which are covered by a control member (2) in normal operations and can be influenced in dependence on the actuation of this control member (2) and that this control member (2) shows such dimensions that only certain of the at least four switching contacts can be operated at the same time in normal operations, and that this control member (2) can be detached from the housing (1), and that the activation of the facility for changing the operating mode occurs as a result of the simultaneous actuation of two switching contacts (3) that are arranged diagonally opposing each other and cannot be actuated simultaneously in normal operations.

2. Electrical / electronic installation device in accordance with Claim 1, **characterised in that** at least one control member (2) that can be detached from the housing (1) covers a group of at least six switching contacts (3), and that the facility for changing the operating mode can be activated as a result of actuating two switching contacts (3) of this group of six switching contacts (3) which are arranged diagonally opposite to one another.

3. Electrical / electronic installation device in accordance with Claim 1 or Claim 2, **characterised in that** at least one control member (2) that can be detached from the housing (1) covers a group of at least eight switching contacts (3), and that the facility for changing the operating mode can be activated as a result of actuating two switching contacts (3) of this group of eight switching contacts (3) which are arranged diagonally opposite to one another.

4. Electrical / electronic installation device in accordance with any of Claims 1 to 3, **characterised in that** at least one switching contact (3) is designed as a micro-switch.

5. Electrical / electronic installation device in accordance with any of Claims 1 to 4, **characterised in that** at least one switching contact (3) is designed as a switching element of a so-called dome-type keypad.

## Revendications

1. Appareil d'installation électrique / électronique pour les installations techniques systémiques des bâtiments avec un boîtier (1) en plastique recevant les composants fonctionnels et plusieurs éléments d'actionnement (2) logés sur le boîtier (1) de façon modulable ainsi qu'un dispositif de commutation de mode de service recouvert en mode de fonctionnement normal, **caractérisé en ce que** le dispositif de commutation de mode de service comporte un groupe d'au moins quatre contacts de commutation (3) qui, en mode normal, sont recouverts par un élément d'actionnement (2) et sur lesquels il est possible d'influer en fonction de l'actionnement de cet élément (2), **en ce que** cet élément d'actionnement (2) présente des dimensions telles que seuls certains des contacts de commutation - qui sont au nombre d'au moins quatre - peuvent être actionnés simultanément en mode normal, **en ce que** cet élément d'actionnement (2) peut être retiré du boîtier (1), et **en ce que** l'activation du dispositif de commutation de mode de service résulte de l'actionnement simultané de deux contacts de commutation (3) opposés diagonalement et ne pouvant pas être actionnés simultanément en mode normal.

2. Appareil d'installation électrique / électronique selon la revendication 1, **caractérisé en ce qu'**au moins un élément d'actionnement (2) qui recouvre un groupe d'au moins six contacts de commutation (3) peut être retiré du boîtier (1) et **en ce que** le dispositif de commutation de mode de service peut être activé par l'actionnement de deux contacts de commutation (3) - opposés diagonalement - de ce groupe de six contacts (3).

3. Appareil d'installation électrique / électronique selon la revendication 1 ou 2, **caractérisé en ce qu'**au moins un élément d'actionnement (2) qui recouvre un groupe d'au moins huit contacts de commutation (3) peut être retiré du boîtier (1) et que le dispositif de commutation de mode de service peut être activé par l'actionnement de deux contacts de commutation (3) - opposés diagonalement - de ce groupe de huit contacts (3).

4. Appareil d'installation électrique / électronique selon l'une des revendications 1 à 3 **caractérisé en ce qu'**au moins un contact de commutation (3) est réalisé sous forme de minirupteur.

5. Appareil d'installation électrique / électronique selon l'une des revendications 1 à 4 **caractérisé en ce qu'**au moins un contact de commutation (3) est réalisé sous forme d'élément de commutation d'un « bloc de minirupteurs ou de minitouches ».
